# EUROPEAN PATENT APPLICATION

(11) **EP 4 455 950 A1**
(43) Date of publication of application: **30.10.2024**
(21) Application number: 21968408.1
(22) Date of filing: 20.12.2021
(51) Int. Cl.: G06N 20/00, G06F 30/27

(54) **METHOD AND APPARATUS FOR GUARANTEEING VALIDATION OF AI MODEL IN WIRELESS COMMUNICATIONS, AND TERMINAL AND MEDIUM**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); TIAN, Wenqiang, Dongguan, Guangdong 523860 (CN); SHI, Cong, Dongguan, Guangdong 523860 (CN); XU, Yang, Dongguan, Guangdong 523860 (CN)
(74) Representative: Novagraaf Technologies
(86) International application number: PCT/CN2021/139547
(87) International publication number: WO 2023/115251

(57) **Abstract**

The present application belongs to the technical field of communications. Disclosed in the present application are a method and apparatus for guaranteeing the validation of an AI model in wireless communications, and a terminal and a medium. The method is executed by a terminal. The method comprises: when a model failure condition is met, executing a validation management process regarding a first AI model. The method is executed by a terminal. The method comprises: when a model failure condition is met, executing a validation management process regarding a first AI model.

## Description

### TECHNICAL FIELD

The present disclosure relates to the field of communications, and in particular, relates to a method and apparatus for ensuring effectiveness of an artificial intelligence (AI) model in wireless communications, and a terminal and a medium.

### BACKGROUND

AI model-based solutions are increasingly applied in wireless communication systems. For example, machine learning models for wireless channel processing are determined by AI.

In the related art, a conventional method for wireless communications is adopted. Specifically, theoretical modeling is performed on an actual communication environment, and a transmission mode between a terminal and a network device is determined based on the established model.

However, with variable scenarios and complex communication environments, the effect of the related art is poor.

### SUMMARY

Embodiments of the present disclosure provide a method and apparatus for ensuring effectiveness of an AI model in wireless communications, and a terminal and a medium, and provide a method for ensuring effectiveness of an AI model all the time.

According to an aspect of the embodiments of the present disclosure, a method for ensuring effectiveness of an AI model in wireless communications is provided. The method is applicable to a terminal.

The method includes: performing an effectiveness management process of a first AI model in response to a model failure condition being met.

According to another aspect of the embodiments of the present disclosure, an apparatus for ensuring effectiveness of an AI model in wireless communications is provided.

The apparatus includes: an executing module, configured to perform an effectiveness management process of a first AI model in response to a model failure condition being met.

According to another aspect of the embodiments of the present disclosure, a terminal is provided.

The terminal includes: a processor; a transceiver connected to the processor; and a memory configured to store one or more instructions executable by the processor. The processor is configured to load and execute the one or more executable instructions to perform the method for ensuring effectiveness of an AI model in wireless communications according to any of the above aspects.

According to another aspect of the embodiments of the present disclosure, a chip is provided. The chip is configured to perform the method for ensuring effectiveness of an AI model in wireless communications according to any of the above aspects.

According to another aspect of the embodiments of the present disclosure, a computer-readable storage medium storing at least one instruction, at least one program, a code set, or an instruction set therein is provided. The at least one instruction, the at least one program, the code set, or the instruction set, when loaded and executed by a processor, causes the processor to perform the method for ensuring effectiveness of an AI model in wireless communications according to any of the above aspects.

The technical solutions according to the embodiments of the present disclosure include the following beneficial effects:

The method can execute the effectiveness management process based on actual requirements, and process the AI model accordingly to ensure the effectiveness of the AI model and improve the performance of wireless communications.

### BRIEF DESCRIPTION OF DRAWINGS

FIG. 1 is a schematic diagram of a communication system according to some exemplary embodiments of the present disclosure;
FIG. 2 is a flowchart of a method for ensuring effectiveness of an AI model in wireless communications according to some exemplary embodiments of the present disclosure;
FIG. 3 is a flowchart of a method for ensuring effectiveness of an AI model in wireless communications according to some exemplary embodiments of the present disclosure;
FIG. 4 is a flowchart of a method for ensuring effectiveness of an AI model in wireless communications according to some exemplary embodiments of the present disclosure;
FIG. 5 is a flowchart of a method for ensuring effectiveness of an AI model in wireless communications according to some exemplary embodiments of the present disclosure;
FIG. 6 is a flowchart of a method for ensuring effectiveness of an AI model in wireless communications according to some exemplary embodiments of the present disclosure;
FIG. 7 is a flowchart of a method for ensuring effectiveness of an AI model in wireless communications according to some exemplary embodiments of the present disclosure;
FIG. 8 is a flowchart of a method for ensuring effectiveness of an AI model in wireless communications according to some exemplary embodiments of the present disclosure;
FIG. 9 is a flowchart of a method for ensuring effectiveness of an AI model in wireless communications according to some exemplary embodiments of the present disclosure;
FIG. 10 is a flowchart of a method for ensuring effectiveness of an AI model in wireless communications according to some exemplary embodiments of the present disclosure;
FIG. 11 is a flowchart of a method for ensuring effectiveness of an AI model in wireless communications according to some exemplary embodiments of the present disclosure;
FIG. 12 is a flowchart of a method for ensuring effectiveness of an AI model in wireless communications according to some exemplary embodiments of the present disclosure;
FIG. 13 is a flowchart of a method for ensuring effectiveness of an AI model in wireless communications according to some exemplary embodiments of the present disclosure;
FIG. 14 is a flowchart of a method for ensuring effectiveness of an AI model in wireless communications according to some exemplary embodiments of the present disclosure;
FIG. 15 is a block diagram of an apparatus for ensuring effectiveness of an AI model in wireless communications according to some exemplary embodiments of the present disclosure;
FIG. 16 is a schematic structural diagram of a terminal according to some exemplary embodiments of the present disclosure; and
FIG. 17 is a schematic structural diagram of a network device according to some exemplary embodiments of the present disclosure.

### DETAILED DESCRIPTION

For clearer descriptions of the objects, technical solutions, and advantages of the present disclosure, embodiments of the present disclosure are further described in detail below with reference to the accompanying drawings.

The network architecture and service scenarios described in the embodiments of the present disclosure are intended to describe the technical solutions in the embodiments of the present disclosure more clearly, but do not constitute any limitation on the technical solutions. Those of ordinary skilled in the art are clear that, with the evolution of the network architecture and the emergence of new service scenarios, the technical solutions according to the embodiments of the present disclosure are also applicable to similar technical problems.

The technical solutions according to the embodiments of the present disclosure are applicable to various communication systems, such as a global system of mobile communication (GSM) system, a code division multiple access (CDMA) system, a wideband code division multiple access (WCDMA) system, a general packet radio service (GPRS) system, a long-term evolution (LTE) system, an advanced long-term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5^{th} generation (5G) system, or other communication systems.

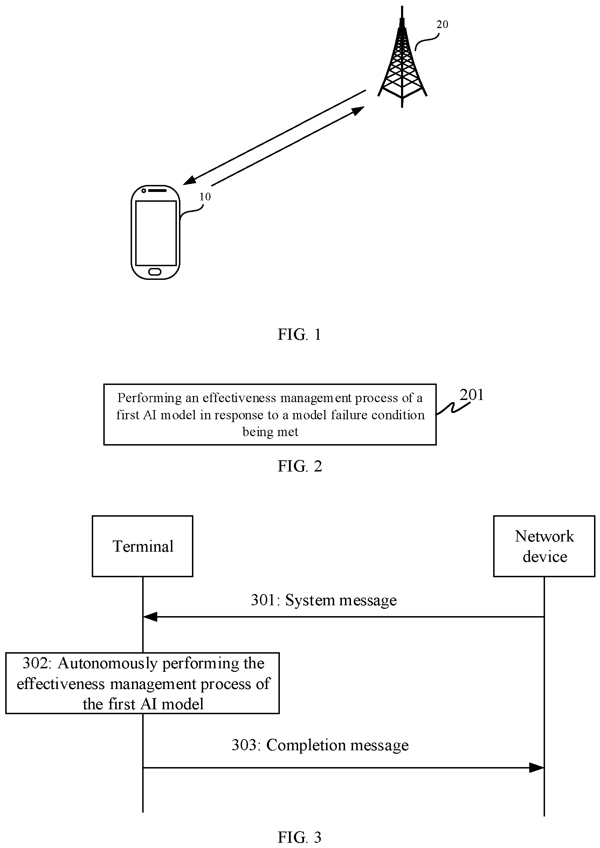

FIG. 1 shows a schematic diagram of a mobile communication system according to some exemplary embodiments of the present disclosure. The mobile communication system includes: a terminal 10 and a network device 20.

Typically, a plurality of terminals 10 are deployed, and one or more terminals 10 may be distributed in a cell managed by each network device 20. The terminals 10 may include various handheld devices having mobile communication functions, vehicle-mounted devices, wearable devices, computing devices, or other processing devices connected to a radio modem, and various forms of user equipments (UEs), mobile stations (MSs), or the like.

The network device 20 is an apparatus deployed in an access network to provide a mobile communication function for the terminal 10. The network device 20 may include various forms of macro base stations, micro base stations, relay stations, access points, location management function (LMF) entities, or the like. In systems using different radio access technologies, a device with functionality of an access network device may have different names. For example, the device is referred to as a gNodeB or a gNB in the 5G NR system. As communication technologies evolve, the name "network device" may change. For convenience of description, in the embodiments of the present disclosure, the apparatus for providing the terminal 10 with the mobile communication function is collectively referred to as a network device. The network device 20 and the terminal 10 may establish a connection therebetween over an air interface, and then communicate with each other over the connection, including signaling and data interaction. A plurality of network devices 20 are deployed, and two adjacent network devices 20 may communicate with each other in a wired or wireless manner. The terminal 10 may switch between different network devices 20, that is, establishing connections with different network devices 20. In this embodiment, the network device 20 is considered as an access network device.

The "SG NR system" in the embodiments of the present disclosure may also be referred to as a 5G system or an NR system, and those skilled in the art may understand the meaning thereof. The technical solutions described in the embodiments of the present disclosure are applicable to the 5G NR system, and also to an evolved system of the 5G NR system.

FIG. 2 shows a flowchart of a method for ensuring effectiveness of an AI model in wireless communications according to some exemplary embodiments of the present disclosure of the present disclosure. This embodiment is illustrated by applying the method to the communication system as shown in FIG. 1. The method includes the following process.

**In process 201,** an effectiveness management process of a first AI model is performed in response to a model failure condition being met.

The model failure condition includes, but is not limited to, the following ten cases:

### 1. The terminal performs the effectiveness management process of the first AI model in response to the terminal leaving an effective region of the first AI model.

In some embodiments, the terminal receives a system message broadcast by the network device, and performs the effectiveness management process of the first AI model in response to a region identifier in the system message being different from a model effective region identifier of the first AI model. In some embodiments, the region identifier in the system message indicates the region where the terminal is located.

The effective region of the first AI model is at least one of a tracking area, a radio access network (RAN) region, or a custom region, and the effective region includes at least one cell.

### 2. The effectiveness management process of the first AI model is performed in response to expiration of an effective period of the first AI model.

In some embodiments, the effective period of the first AI model is determined based on a first timer, which is configured to ensure the effectiveness of the first AI model. Illustratively, in the case of timeout of the first timer of the first AI model, the first AI model is considered ineffective, and further, the effectiveness management process of the first AI model is performed.

The first timer is started in response to the terminal receiving configuration information of the first timer, or the first timer is started in response to the terminal starting to use the first AI model, or the first timer is started in response to the terminal receiving the first AI model.

The first timer is stopped in response to the terminal stopping using the model.

The first timer may be configured to the terminal by the network device, or the first timer may be configured by the terminal.

The first timer is determined based on at least one of an effective duration of the first AI model, the service type, a travel trajectory/region of the terminal, or network load/energy consumption.

### 3. The effectiveness management process of the first AI model is performed based on a periodic update of the first AI model.

In some embodiments, the effectiveness management process of the first AI model is determined to be performed based on a periodic timer of the first AI model. The periodic timer may be configured to the terminal by the network device, or the periodic timer may be configured by the terminal.

In some embodiments, the periodic timer is started/restarted in response to the terminal receiving configuration information of the periodic timer, or the periodic timer is started/restarted in response to the terminal starting to use the first AI model, or the periodic timer is started/restarted in response to the terminal receiving the first AI model.

In some embodiments, the periodic timer is stopped in response to timeout of the periodic timer.

In some embodiments, the periodic timer may be configured to the terminal by the network device, or the periodic timer may be configured by the terminal.

In some embodiments, the periodic timer is determined based on at least one of an effective duration of the first AI model, the service type, a travel trajectory/region of the terminal, or network load/energy consumption.

### 4. The effectiveness management process of the first AI model is performed in response to the channel quality of the terminal meeting a first threshold condition.

The effectiveness management process of the first AI model is performed in response to the channel quality of the terminal being higher than a first threshold; or the effectiveness management process of the first AI model is performed in response to the channel quality of the terminal being lower than a second threshold. The first threshold and/or the second threshold may be pre-configured by the network device or self-defined by the terminal.

### 5. The effectiveness management process of the first AI model is performed in response to an available computing power of the terminal meeting a second threshold condition.

The effectiveness management process of the first AI model is performed in response to the available computing power of the terminal being higher than a third threshold; or the effectiveness management process of the first AI model is performed in response to the available computing power of the terminal being lower than a fourth threshold. The third threshold and/or the fourth threshold may be pre-configured by the network device or self-defined by the terminal.

### 6. The effectiveness management process of the first AI model is performed in response to a storage capacity of the terminal meeting a third threshold condition.

The effectiveness management process of the first AI model is performed in response to the storage capacity of the terminal being higher than a fifth threshold; or the effectiveness management process of the first AI model is performed in response to the storage capacity of the terminal being lower than a sixth threshold. The fifth threshold and/or the sixth threshold may be pre-configured by the network device or self-defined by the terminal.

### 7. The effectiveness management process of the first AI model is performed in response to a change of a service type of the terminal or a change of quality of service (QoS).

In some embodiments, the terminal performs the effectiveness management process of the first AI model in response to the terminal desiring to adjust the matched AI model based on the service demands.

### 8. The effectiveness management process of the first AI model is performed in response to an accuracy of the first AI model failing to meet a model accuracy requirement.

Illustratively, using mobility enhancement as an example, in response to N consecutive switching failures of a switching decision based on the first AI model, it is considered the accuracy of the first AI model is insufficient and is not suitable for optimization of a current scenario, and an effectiveness management process of the first AI model needs to be performed.

### 9. The effectiveness management process of the first AI model is performed in response to a change of a wireless environment of the terminal.

In some embodiments, the effectiveness management process of the first AI model is performed in response to a change of a classification of a wireless environment.

In some embodiments, the effectiveness management process of the first AI model is performed in response to a change of a scenario characteristic of a wireless environment change. Illustratively, the scenario characteristic of a wireless environment includes at least one of different indoor/outdoor environments, dense cells/open fields, line of sight (LOS)/non-line of sight (NLOS), or high/low speeds.

In some embodiments, the effectiveness management process of the first AI model is performed in response to a change of a channel environment indicator characteristic of a wireless environment. Illustratively, the channel environment indicator characteristic of a wireless environment includes at least one of delay power spectrum information, multipath information, angle information, or velocity information.

In some embodiments, the effectiveness management process of the first AI model is performed in response to a change of time domain characteristic information of a wireless environment.

In some embodiments, the effectiveness management process of the first AI model is performed in response to a change of frequency domain characteristic information of a wireless environment.

In some embodiments, the effectiveness management process of the first AI model is performed in response to a change of spatial characteristic information of a wireless environment.

### 10. The effectiveness management process of the first AI model is performed in response to receiving a model switching indication message indicated by the network device.

The terminal may autonomously perform the effectiveness management process of the first AI model. Illustratively, the terminal autonomously performs the effectiveness management process of the first AI model in response to the model failure condition being met. Autonomously performing, by the terminal, the effectiveness management process of the first AI model includes at least one of autonomously updating the first AI model, autonomously switching the first AI model to a second AI model, or autonomously stopping using the first AI model.

In some embodiments, the terminal autonomously updates the configuration information of the first AI model in response to the model failure condition being met. The terminal updates the first AI model based on the updated configuration information. The configuration information of the first AI model includes, but is not limited to, at least one of structure information or parameter information of the first AI model. At least two sets of candidate AI models are associated with at least one of the computing power, services, or the channel quality of the terminal.

In some embodiments, the terminal stores at least two sets of candidate AI models. The terminal autonomously determines the second AI model from the at least two sets of AI models and switches the first AI model to the second AI model, in response to the model failure condition being met. The at least two sets of candidate AI models are associated with at least one of the computing power, services, or the channel quality of the terminal. The at least two sets of candidate AI models may be pre-configured to the terminal by the network device or configured by the terminal.

In some embodiments, the terminal autonomously stops using the first AI model in response to the model failure condition being met. In some embodiments, the terminal stops using a first timer associated with the first AI model and deletes configuration information of the first AI model.

The terminal may also perform the effectiveness management process of the first AI model by sending request information to the network device, wherein the request information is to request the network device to perform the effectiveness management process of the first AI model. Illustratively, the request information is reported to the network device in response to the model failure condition being met; and the effectiveness management process of the first AI model is performed based on indication information provided by the network device. Performing, by the terminal, the effectiveness management process of the first AI model based on the indication information provided by the network device includes at least one of updating the first AI model, switching the first AI model to a second AI model, or stopping using the first AI model.

In some embodiments, the request information includes configuration information of the first AI model and/or auxiliary information for model update. The terminal reports the request information to the network device in response to the model failure condition being met. The terminal updates the first AI model based on the configuration information of the first AI model and/or the auxiliary information for model update provided by the network device. The configuration information of the first AI model includes structure information and/or parameter information of the first AI model.

In some embodiments, the terminal stores at least two sets of candidate AI models, and the indication information includes an identifier of the second AI model. The terminal reports the request information to the network device in response to the model failure condition being met. The terminal determines the second AI model from the at least two sets of candidate AI models based on the identifier of the second AI model provided by the network device, and switches the first AI model to the second AI model. In some embodiments, the request information includes a suggested AI model identifier, such that the network device determines an AI model to be switched based on the suggestion of the terminal.

In some embodiments, the terminal reports the request information to the network device in response to the model failure condition being met. The terminal stops using the first AI model based on the indication information provided by the network device. In some embodiments, the terminal stops using a first timer associated with the first AI model and deletes configuration information of the first AI model.

In some embodiments, the terminal reports a completion message to the network device, wherein the completion message indicates that the terminal completes the effectiveness management process of the first AI model. In some embodiments, the completion message includes at least one of the updated structure information and/or parameter information of the first AI model, an identifier of the second AI model, or a message to stop using the first AI model.

In some embodiments, updating the first AI model includes at least one of adjusting the number of layers of the first AI model, updating network parameters and/or a network topology of the first AI model, or pruning or compressing the first AI model.

The first AI model is configured to implement at least one of mobility enhancement, channel state information (CSI) feedback, channel estimation, load balancing, power-saving of the terminal/network, beam management, trajectory prediction of the terminal, service prediction, location enhancement, or radio resource management. The mobility enhancement is to enhance the continuity of services ensured by the terminal in a mobile state, such as reducing the switching interruption by selecting a more appropriate target cell. The CSI feedback is to achieve an interaction of channel state information between the terminal and the network device. The channel estimation is to estimate model parameters of the first AI model in the channel data. The load balancing is to balance services and allocate the services to a plurality of operating units for operation. The power-saving of the terminal/network is to reduce ineffective energy consumption of the terminal/network. The beam management is to manage beams for signal transmission. The trajectory prediction of the terminal is to predict the moving trajectory of the terminal. The service prediction is to predict services of the terminal. The location enhancement is to determine the position of the terminal. The radio resource management is to provide QoS assurance for terminals in a network with a limited bandwidth.

The first AI model operates and is trained or reasoned in any one of a radio resource control (RRC) layer, a service data adaptation protocol (SDAP) layer, a packet data convergence protocol (PDCP) layer, a radio link control (RLC) layer, a medium access control (MAC) layer, or a physical (PHY) layer. The first AI model or the reasoning result of the first AI model may be transmitted over inter-layer interactions.

Functions optimized by the first AI model are functions corresponding to any one of the RRC, SDAP, PDCP, RLC, MAC, or PHY layers.

In summary, in this embodiment, the effectiveness management process is performed based on actual requirements, and the AI model is processed accordingly to ensure the effectiveness of the AI model and improve the performance of wireless communications.

The following embodiments will be illustrated by using the terminal leaving the effective region of the first AI model being the model failure condition as an example, the terminal may autonomously perform the effectiveness management process of the first AI model, and FIG. 3 shows a flowchart of a method for ensuring effectiveness of an AI model in wireless communications according to some exemplary embodiments of the present disclosure. This embodiment is illustrated by applying the method to the communication system as shown in FIG. 1. The method includes the following processes.

**In process 301,** the network device broadcasts a system message to the terminal.

In some embodiments, the system message includes a region identifier.

The effective region of the first AI model is at least one of a tracking area, a radio access network (RAN) region, or a custom region, and the effective region includes at least one cell.

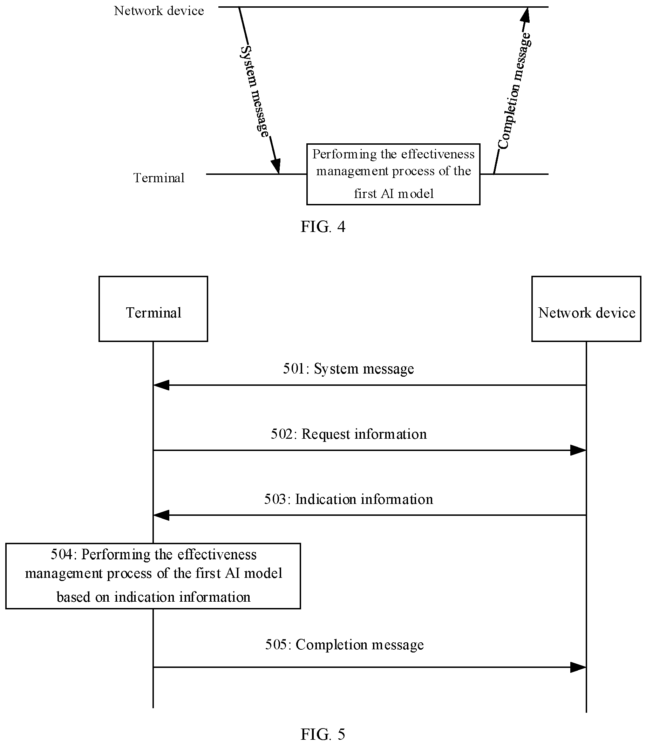

Illustratively, as shown in FIG. 4, the network device broadcasts a system message to the terminal.

**In process 302,** the terminal autonomously performs the effectiveness management process of the first AI model in response to the model failure condition being met.

In the embodiments of the present disclosure, the model failure condition means that the region identifier in the system message is different from a model effective region identifier of the first AI model.

In some embodiments, the terminal autonomously updates the first AI model based on model input information during use of the first AI model in response to the model failure condition being met. Illustratively, the first AI model is an AI model for trajectory prediction. The terminal may update the first AI model based on historical trajectory information input during use of the first AI model in response to determining that the terminal leaves the effective region of the first AI model. In some embodiments, updating the first AI model includes at least one of adjusting the number of layers of the first AI model, updating network parameters and/or a network topology of the first AI model, or pruning or compressing the first AI model.

In some embodiments, the terminal stores at least two sets of candidate AI models. The terminal determines the second AI model from the at least two sets of candidate AI models in response to the model failure condition being met. The terminal autonomously switches the first AI model to the second AI model. At least two sets of candidate AI models are associated with at least one of the computing power, services, or the channel quality of the terminal. The at least two sets of candidate AI models may be pre-configured to the terminal by the network device or configured by the terminal.

In some embodiments, the at least two sets of candidate AI models are associated with the region.

In some embodiments, the terminal autonomously stops using the first AI model in response to the model failure condition being met. As the model effective region identifier of the first AI model does not match the region identifier provided by the system message, the first AI model may no longer be applicable, and the terminal may autonomously stop using the first AI model and perform a corresponding process based on a pre-configured rule or algorithm, or perform a corresponding process based on an existing protocol specification. In some embodiments, the terminal stops using a first timer associated with the first AI model and deletes configuration information of the first AI model.

**In process 303,** the terminal reports a completion message to the network device.

The completion message indicates that the terminal completes the effectiveness management process of the first AI model. In some embodiments, the completion message includes at least one of the updated structure information and/or parameter information of the first AI model, an identifier of the second AI model, or a message to stop using the first AI model.

The completion message may be transmitted over at least one of an RRC message, a medium access control-control element (MAC-CE), or uplink control information (UCI).

Illustratively, as shown in FIG. 4, the terminal reports a completion message to the network device.

It should be noted that this process is optional, which may or may not be performed.

In summary, in this embodiment, the terminal autonomously updates, switches, or returns the first AI model in response to the terminal leaving the effective region of the first AI model, such that the performance of wireless communications is improved.

The following embodiments will be illustrated by using the terminal leaving the effective region of the first AI model being the model failure condition as an example, the terminal needs to report request information to the network device to perform the effectiveness management process of the first AI model, and FIG. 5 shows a flowchart of a method for ensuring effectiveness of an AI model in wireless communications according to some exemplary embodiments of the present disclosure. This embodiment is illustrated by applying the method to the communication system as shown in FIG. 1. The method includes the following processes.

**In** process 501, the network device broadcasts a system message to the terminal.

In some embodiments, the system message includes a region identifier.

The effective region of the first AI model is at least one of a tracking area, a radio access network (RAN) region, or a custom region, and the effective region includes at least one cell.

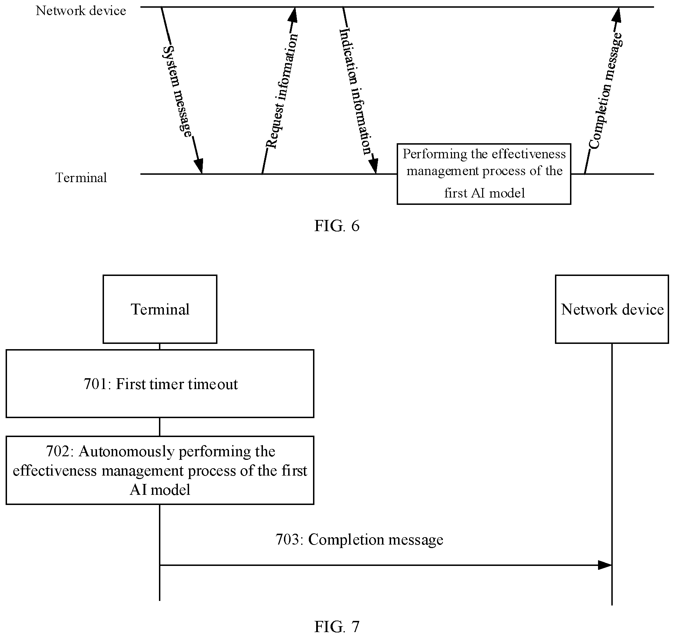

Illustratively, as shown in FIG. 6, the network device broadcasts a system message to the terminal.

**In process 502,** the terminal reports request information to the network device in response to a model failure condition being met.

In the embodiments of the present disclosure, the model failure condition means that the region identifier in the system message is different from a model effective region identifier of the first AI model.

In some embodiments, in the case that the terminal stores at least two sets of AI models, the request information includes an identifier of a suggested AI model, such that the network device determines an AI model to be switched based on the suggestion of the terminal.

Illustratively, as shown in FIG. 6, the terminal reports request information to the network device.

**In process 503,** the network device provides indication information for the terminal.

In some embodiments, the indication information includes configuration information of the first AI model and/or auxiliary information for model update, such that the terminal updates the first AI model based on the indication information. The configuration information of the first AI model includes structure information and/or parameter information of the first AI model.

In some embodiments, in the case that the terminal stores at least two sets of candidate AI models, the indication information includes an identifier of the second AI model, such that the terminal determines an AI model to be switched based on the identifier of the second AI model. At least two sets of AI models may be pre-configured by the network device. The at least two sets of candidate AI models are associated with at least one of the computing power, services, or the channel quality of the terminal.

In some embodiments, the indication information is to instruct the terminal to stop using the first AI model.

Illustratively, as shown in FIG. 6, the network device provides indication information for the terminal.

**In process 504,** the terminal performs the effectiveness management process of the first AI model based on indication information provided by the network device.

In some embodiments, in the case that the indication information includes configuration information of the first AI model and/or auxiliary information for model update, the terminal updates the first AI model based on the configuration information of the first AI model and/or the auxiliary information for model update provided by the network device. In some embodiments, updating the first AI model includes at least one of adjusting the number of layers of the first AI model, updating network parameters and/or a network topology of the first AI model, or pruning or compressing the first AI model.

In some embodiments, the indication information includes an identifier of the second AI model; and the terminal stores at least two sets of candidate AI models. The terminal stores at least two sets of candidate AI models. The terminal determines the second AI model from the at least two sets of candidate AI models based on the identifier of the second AI model provided by the network device, and switches the first AI model to the second AI model. The terminal autonomously switches the first AI model to the second AI model.

In some embodiments, the at least two sets of candidate AI models are associated with the region.

In some embodiments, the terminal stops using the first AI model based on the indication information provided by the network device. As the terminal leaves the effective region of the first AI model, the first AI model may no longer be applicable, and the terminal may stop using the first AI model based on the indication information of the network device and perform a corresponding process based on a pre-configured rule or algorithm, or perform a corresponding process based on an existing protocol specification. In some embodiments, the terminal stops using a first timer associated with the first AI model and deletes configuration information of the first AI model.

**In process 505,** the terminal reports a completion message to the network device.

The completion message indicates that the terminal completes the effectiveness management process of the first AI model.

The completion message may be transmitted over at least one of an RRC message or a MAC-CE or UCI.

Illustratively, as shown in FIG. 6, the terminal reports a completion message to the network device.

It should be noted that this process is optional, which may or may not be performed.

In summary, in this embodiment, the terminal reports the request information to the network device to update, switch, or return the first AI model in response to the terminal leaving the effective region of the first AI model, such that the performance of wireless communications is improved.

The following embodiments will be illustrated by using the timeout of a first timer of the first AI model as an example, the terminal may autonomously perform the effectiveness management process of the first AI model, and FIG. 7 shows a flowchart of a method for ensuring effectiveness of an AI model in wireless communications according to some exemplary embodiments of the present disclosure. This embodiment is illustrated by applying the method to the communication system as shown in FIG. 1. The method includes the following processes.

**In process 701,** the terminal determines the timeout of a first timer.

The first timer is configured to ensure the effectiveness of the first AI model.

The first timer is determined based on at least one of an effective duration of the first AI model, the service type, a travel trajectory/region of the terminal, or network load/energy consumption.

The first timer is started in response to the terminal receiving configuration information of the first timer, or the first timer is started in response to the terminal starting to use the first AI model, or the first timer is started in response to the terminal receiving the first AI model.

The first timer may be configured to the terminal by the network device, or the first timer may be configured by the terminal.

**In process 702,** the terminal autonomously performs an effectiveness management process of a first AI model.

In some embodiments, in the case of the first timer timeout, the terminal autonomously updates the first AI model based on model input information during use of the first AI model. Illustratively, the first AI model is an AI model for trajectory prediction. The terminal may update the first AI model based on historical trajectory information input during use of the first AI model in response to determining that the terminal leaves the effective region of the first AI model. In some embodiments, updating the first AI model includes at least one of adjusting the number of layers of the first AI model, updating network parameters and/or a network topology of the first AI model, or pruning or compressing the first AI model.

In some embodiments, the terminal stores at least two sets of candidate AI models. In the case of the first timer timeout, the terminal determines the second AI model from the at least two sets of candidate AI models. The terminal autonomously switches the first AI model to the second AI model. At least two sets of candidate AI models are associated with at least one of the computing power, services, or the channel quality of the terminal. The at least two sets of candidate AI models may be pre-configured to the terminal by the network device.

In some embodiments, in the case of the first timer timeout, the terminal autonomously stops using the first AI model. As the first AI model fails, the terminal may autonomously stop using the first AI model and perform a corresponding process based on a pre-configured rule or algorithm, or perform a corresponding process based on an existing protocol specification. In some embodiments, the terminal stops using the first timer and deletes configuration information of the first AI model.

**In process 703,** the terminal reports a completion message to the network device.

The completion message indicates that the terminal completes the effectiveness management process of the first AI model. In some embodiments, the completion message includes at least one of the updated structure information and/or parameter information of the first AI model, an identifier of the second AI model, or a message to stop using the first AI model.

The completion message may be transmitted over at least one of an RRC message or a MAC-CE or UCI.

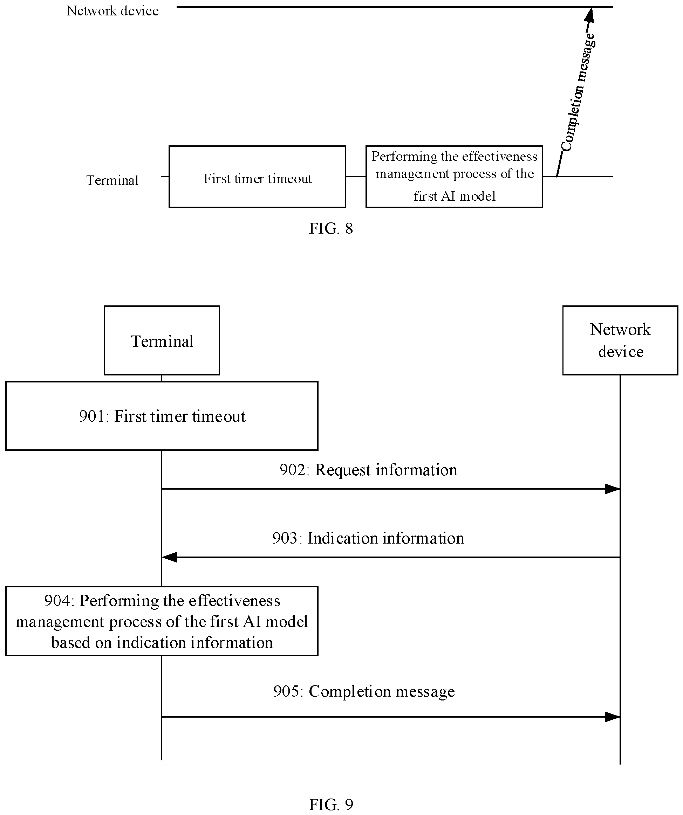

Illustratively, as shown in FIG. 8, the terminal reports a completion message to the network device.

It should be noted that this process is optional, which may or may not be performed.

In summary, in this embodiment, the first AI model is autonomously updated, switched, or returned in response to timeout of the first timer, such that the performance of wireless communications is improved.

The following embodiments will be illustrated by using the timeout of a first timer of the first AI model as an example, the terminal needs to report request information to the network device to perform the effectiveness management process of the first AI model, and FIG. 9 shows a flowchart of a method for ensuring effectiveness of an AI model in wireless communications according to some exemplary embodiments of the present disclosure. This embodiment is illustrated by applying the method to the communication system as shown in FIG. 1. The method includes the following processes.

**In process 901,** the terminal determines the timeout of a first timer.

The first timer is configured to ensure the effectiveness of the first AI model.

The first timer is determined based on at least one of an effective duration of the first AI model, the service type, a travel trajectory/region of the terminal, or network load/energy consumption.

The first timer is started in response to the terminal receiving configuration information of the first timer, or the first timer is started in response to the terminal starting to use the first AI model, or the first timer is started in response to the terminal receiving the first AI model.

The first timer may be configured to the terminal by the network device, or the first timer may be configured by the terminal.

**In process 902,** the terminal reports request information to the network device.

In some embodiments, in the case that the terminal stores at least two sets of AI models, the request information includes an identifier of a suggested AI model, such that the network device determines an AI model to be switched based on the suggestion of the terminal.

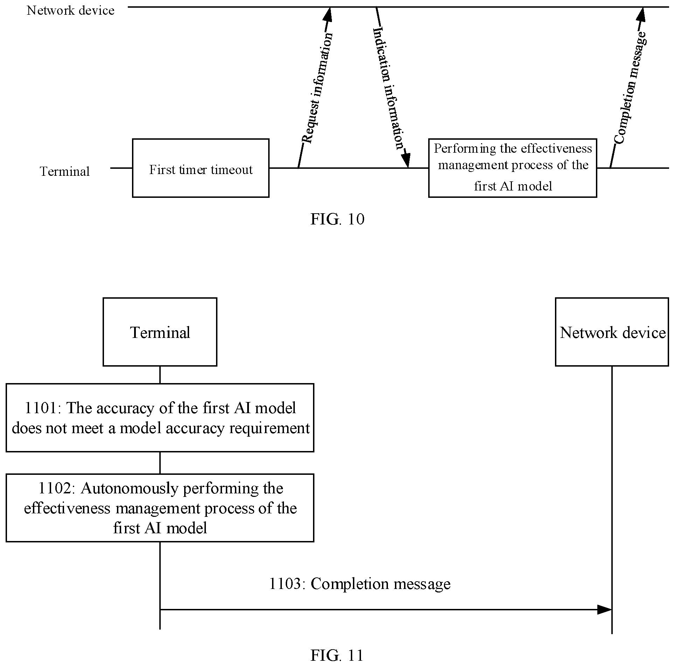

Illustratively, as shown in FIG. 10, the terminal reports request information to the network device.

**In process 903,** the network device provides indication information for the terminal.

In some embodiments, the indication information includes configuration information of the first AI model and/or auxiliary information for model update, such that the terminal updates the first AI model based on the indication information. The configuration information of the first AI model includes structure information and/or parameter information of the first AI model.

In some embodiments, in the case that the terminal stores at least two sets of candidate AI models, the indication information includes an identifier of the second AI model, such that the terminal determines an AI model to be switched based on the identifier of the second AI model. At least two sets of AI models may be pre-configured by the network device. The at least two sets of candidate AI models are associated with at least one of the computing power, services, or the channel quality of the terminal.

Illustratively, as shown in FIG. 10, the network device provides indication information for the terminal.

**In process 904,** the terminal performs the effectiveness management process of the first AI model based on indication information provided by the network device.

In some embodiments, in the case that the indication information includes configuration information of the first AI model and/or auxiliary information for model update, the terminal updates the first AI model based on the configuration information of the first AI model and/or the auxiliary information for model update provided by the network device. In some embodiments, updating the first AI model includes at least one of adjusting the number of layers of the first AI model, updating network parameters and/or a network topology of the first AI model, or pruning or compressing the first AI model.

In some embodiments, the indication information includes an identifier of the second AI model; and the terminal stores at least two sets of candidate AI models. The terminal stores at least two sets of candidate AI models. The terminal determines the second AI model from the at least two sets of candidate AI models based on the identifier of the second AI model provided by the network device, and switches the first AI model to the second AI model. The terminal autonomously switches the first AI model to the second AI model.

In some embodiments, the terminal stops using the first AI model based on the indication information provided by the network device. As the first timer fails, the first AI model may no longer be applicable, and the terminal may stop using the first AI model based on the indication information of the network device and perform a corresponding process based on a pre-configured rule or algorithm, or perform a corresponding process based on an existing protocol specification. In some embodiments, the terminal stops using a first timer associated with the first AI model and deletes configuration information of the first AI model.

**In process 905,** the terminal reports a completion message to the network device.

The completion message indicates that the terminal completes the effectiveness management process of the first AI model.

The completion message may be transmitted over at least one of an RRC message or a MAC-CE or UCI.

Illustratively, as shown in FIG. 10, the terminal reports a completion message to the network device.

It should be noted that this process is optional, which may or may not be performed.

In summary, in this embodiment, the terminal reports the request information to the network device to update, switch, or return the first AI model in response to expiration of the effective period of the first timer, such that the performance of wireless communications is improved.

The following embodiments will be illustrated by using the accuracy of the first AI model not meeting a model accuracy requirement as an example, the terminal may autonomously perform the effectiveness management process of the first AI model, and FIG. 11 shows a flowchart of a method for ensuring effectiveness of an AI model in wireless communications according to some exemplary embodiments of the present disclosure. This embodiment is illustrated by applying the method to the communication system as shown in FIG. 1. The method includes the following processes.

**In process 1101,** the terminal determines that the accuracy of the first AI model does not meet a model accuracy requirement.

The model accuracy requirement may be pre-configured by the network device or self-defined by the terminal.

Illustratively, the first AI model is an AI model for trajectory prediction, a switching decision based on the first AI model results in N consecutive switching failures, and then it is considered that the accuracy of the first AI model does not support optimization of a current scenario.

**In process 1102,** the terminal autonomously performs an effectiveness management process of a first AI model.

In some embodiments, the terminal autonomously updates the first AI model based on model input information during use of the first AI model in response to the accuracy of the first AI model failing to meet the model accuracy requirement. Illustratively, the first AI model is an AI model for trajectory prediction. The terminal may update the first AI model based on historical trajectory information input during use of the first AI model in response to a determination that the terminal leaves the effective region of the first AI model. In some embodiments, updating the first AI model includes at least one of adjusting the number of layers of the first AI model, updating network parameters and/or a network topology of the first AI model, or pruning or compressing the first AI model.

In some embodiments, the terminal stores at least two sets of candidate AI models. The terminal determines the second AI model from the at least two sets of candidate AI models in response to the accuracy of the first AI model failing to meet the model accuracy requirement. The terminal autonomously switches the first AI model to the second AI model. At least two sets of candidate AI models are associated with at least one of the computing power, services, or the channel quality of the terminal. The at least two sets of candidate AI models may be pre-configured to the terminal by the network device or configured by the terminal.

In some embodiments, the terminal autonomously stops using the first AI model in response to the accuracy of the first AI failing to meet the model accuracy requirement. As the first AI model fails, the terminal may perform a corresponding process based on a pre-configured rule or algorithm, or perform a corresponding process based on an existing protocol specification. In some embodiments, the terminal stops using a first timer associated with the first AI model and deletes configuration information of the first AI model.

**In process 1103,** the terminal reports a completion message to the network device.

The completion message indicates that the terminal completes the effectiveness management process of the first AI model. In some embodiments, the completion message includes at least one of the updated structure information and/or parameter information of the first AI model, an identifier of the second AI model, and a message to stop using the first AI model.

The completion message may be transmitted over at least one of an RRC message or a MAC-CE or UCI.

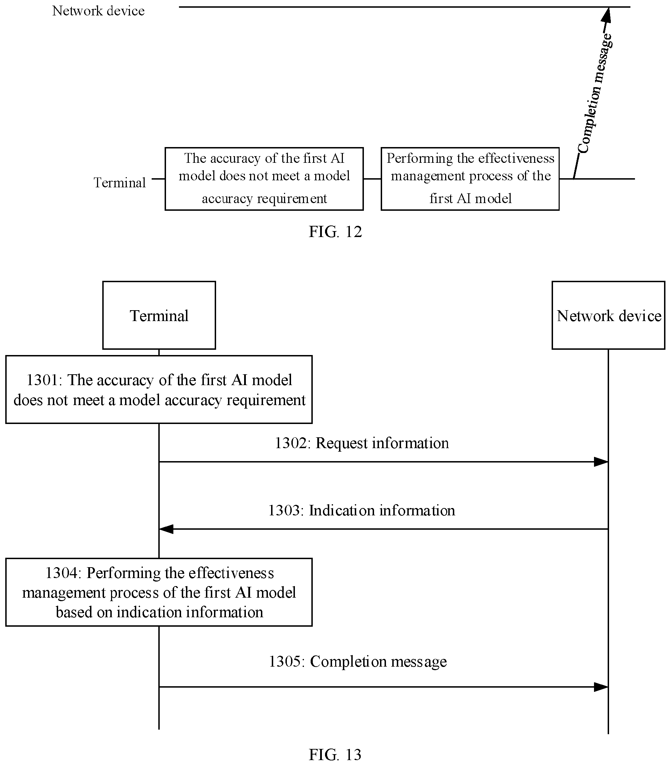

Illustratively, as shown in FIG. 12, the terminal reports a completion message to the network device.

It should be noted that this process is optional, which may or may not be performed.

In summary, in this embodiment, the terminal autonomously updates, switches, or returns the first AI model in response to the accuracy of the first AI model failing to meet the model accuracy requirement, such that the performance of wireless communications is improved.

The following embodiments will be illustrated by using the accuracy of the first AI model not meeting a model accuracy requirement as an example, the terminal needs to report request information to the network device to perform the effectiveness management process of the first AI model, and FIG. 13 shows a flowchart of a method for ensuring effectiveness of an AI model in wireless communications according to some exemplary embodiments of the present disclosure. This embodiment is illustrated by applying the method to the communication system as shown in FIG. 1. The method includes the following processes.

**In process 1301,** the terminal determines that the accuracy of the first AI model does not meet a model accuracy requirement.

The model accuracy requirement may be pre-configured by the network device or self-defined by the terminal.

Illustratively, the first AI model is an AI model for trajectory prediction, a switching decision based on the first AI model results in N consecutive switching failures, and then it is considered that the accuracy of the first AI model does not support optimization of a current scenario.

**In process 1302,** the terminal reports request information to the network device.

In some embodiments, in the case that the terminal stores at least two sets of AI models, the request information includes an identifier of a suggested AI model, such that the network device determines an AI model to be switched based on the suggestion of the terminal.

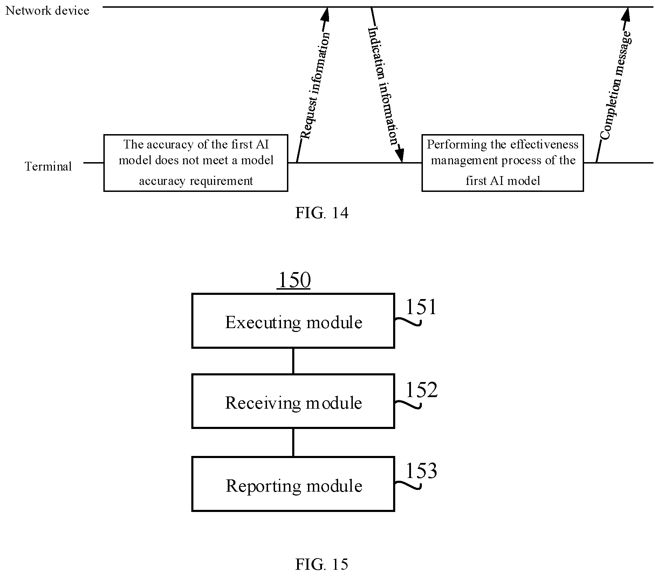

Illustratively, as shown in FIG. 14, the terminal reports request information to the network device.

**In process 1303,** the network device provides indication information for the terminal.

In some embodiments, the indication information includes configuration information of the first AI model and/or auxiliary information for model update, such that the terminal updates the first AI model based on the indication information. The configuration information of the first AI model includes structure information and/or parameter information of the first AI model.

In some embodiments, in the case that the terminal stores at least two sets of candidate AI models, the indication information includes an identifier of the second AI model, such that the terminal determines an AI model to be switched based on the identifier of the second AI model. At least two sets of AI models may be pre-configured by the network device. The at least two sets of candidate AI models are associated with at least one of the computing power, services, or the channel quality of the terminal.

Illustratively, as shown in FIG. 14, the network device provides indication information for the terminal.

**In process 1304,** the terminal performs the effectiveness management process of the first AI model based on indication information provided by the network device.

In some embodiments, in the case that the indication information includes configuration information of the first AI model and/or auxiliary information for model update, the terminal updates the first AI model based on the configuration information of the first AI model and/or the auxiliary information for model update provided by the network device. In some embodiments, updating the first AI model includes at least one of adjusting the number of layers of the first AI model, updating network parameters and/or a network topology of the first AI model, or pruning or compressing the first AI model.

In some embodiments, the indication information includes an identifier of the second AI model; and the terminal stores at least two sets of candidate AI models. The terminal stores at least two sets of candidate AI models. The terminal determines the second AI model from the at least two sets of candidate AI models based on the identifier of the second AI model provided by the network device, and switches the first AI model to the second AI model.

In some embodiments, the terminal stops using the first AI model based on the indication information provided by the network device. As the accuracy of the first AI model does not meet the model accuracy requirement, the first AI model may no longer be applicable, and the terminal may stop using the first AI model based on the indication information of the network device and perform a corresponding process based on a pre-configured rule or algorithm, or perform a corresponding process based on an existing protocol specification. In some embodiments, the terminal stops using a first timer associated with the first AI model and deletes configuration information of the first AI model.

**In process 1305,** the terminal reports a completion message to the network device.

The completion message indicates that the terminal completes the effectiveness management process of the first AI model.

The completion message may be transmitted over at least one of an RRC message or a MAC-CE or UCI.

Illustratively, as shown in FIG. 14, the terminal reports a completion message to the network device.

It should be noted that this process is optional, which may or may not be performed.

In summary, in this embodiment, the terminal reports the request information to the network device to update, switch, or return the first AI model in response to the accuracy of the first AI model failing to meet the model accuracy requirement, such that the performance of wireless communications is improved.

FIG. 15 shows a block diagram of an apparatus for ensuring effectiveness of an AI model in wireless communications according to some exemplary embodiments of the present disclosure.

The apparatus 150 includes: an executing module 151, configured to perform an effectiveness management process of a first AI model in response to a model failure condition being met.

In some embodiments, the executing module 151 is further configured to perform the effectiveness management process of the first AI model in response to a terminal leaving an effective region of the first AI model, or perform the effectiveness management process of the first AI model in response to expiration of an effective period of the first AI model, or perform the effectiveness management process of the first AI model based on a periodic update of the first AI model, or perform the effectiveness management process of the first AI model in response to a channel quality of the terminal meeting a first threshold condition, or perform the effectiveness management process of the first AI model in response to an available computing power of the terminal meeting a second threshold condition, or perform the effectiveness management process of the first AI model in response to a storage capacity of the terminal meeting a third threshold condition, or perform the effectiveness management process of the first AI model in response to a change of a service type of the terminal or a change of quality of service (QoS), or perform the effectiveness management process of the first AI model in response to an accuracy of the first AI model failing to meet a model accuracy requirement, or perform the effectiveness management process of the first AI model in response to a change of a wireless environment, or perform the effectiveness management process of the first AI model in response to receiving a model switching indication message indicated by a network device.

In some embodiments, the apparatus 150 further includes: a receiving module 152, configured to receive a system message broadcast by the network device; and the executing module 151 is further configured to perform the effectiveness management process of the first AI model in response to a region identifier in the system message being different from a model effective region identifier of the first AI model.

In some embodiments, the effective region is at least one of a tracking area, a radio access network (RAN) region, or a custom region, and the effective region includes at least one cell.

In some embodiments, the executing module 151 is further configured to perform the effectiveness management process of the first AI model in response to expiration of an effective period of a first timer of the first AI model, wherein the first timer is configured to ensure effectiveness of the first AI model.

In some embodiments, the executing module 151 is further configured to start the first timer in response to the terminal receiving configuration information of the first timer, or start the first timer in response to the terminal starting to use the first AI model.

In some embodiments, the first timer is determined based on at least one of an effective duration of the first AI model, the service type, a travel trajectory/region of the terminal, or network load/energy consumption.

In some embodiments, the executing module 151 is further configured to perform the effectiveness management process of the first AI model in response to the channel quality of the terminal being higher than a first threshold, or perform the effectiveness management process of the first AI model in response to the channel quality of the terminal being lower than a second threshold.

In some embodiments, the executing module 151 is further configured to perform the effectiveness management process of the first AI model in response to the available computing power of the terminal being higher than a third threshold, or perform the effectiveness management process of the first AI model in response to the available computing power of the terminal being lower than a fourth threshold.

In some embodiments, the executing module 151 is further configured to perform the effectiveness management process of the first AI model in response to the storage capacity of the terminal being higher than a fifth threshold, or perform the effectiveness management process of the first AI model in response to the storage capacity of the terminal being lower than a sixth threshold.

In some embodiments, the executing module 151 is further configured to perform the effectiveness management process of the first AI model in response to a change of a classification of the wireless environment, or perform the effectiveness management process of the first AI model in response to a change of a scenario characteristic of the wireless environment, or perform the effectiveness management process of the first AI model in response to a change of a channel environment indicator characteristic of the wireless environment, or perform the effectiveness management process of the first AI model in response to a change of time domain characteristic information of the wireless environment, or perform the effectiveness management process of the first AI model in response to a change of frequency domain characteristic information of the wireless environment of the terminal, or perform the effectiveness management process of the first AI model in response to a change of spatial characteristic information of the wireless environment.

In some embodiments, the executing module 151 is further configured to autonomously perform the effectiveness management process of the first AI model in response to the model failure condition being met.

In some embodiments, the executing module 151 is further configured to autonomously update the first AI model in response to the model failure condition being met, or autonomously switch the first AI model to a second AI model in response to the model failure condition being met, or autonomously stop using the first AI model in response to the model failure condition being met.

In some embodiments, the executing module 151 is further configured to autonomously update the first AI model based on model input information during use of the first AI model in response to the model failure condition being met.

In some embodiments, the terminal stores at least two sets of candidate AI models; and the executing module 151 is further configured to determine the second AI model from the at least two sets of candidate AI models in response to the model failure condition being met, and autonomously switch the first AI model to the second AI model.

In some embodiments, the at least two sets of candidate AI models are associated with at least one of the computing power, services, or the channel quality of the terminal.

In some embodiments, the apparatus 150 further includes: a reporting module 153, configured to report request information to the network device in response to the model failure condition being met, the request information being configured to request the network device to perform the effectiveness management process of the first AI model; and the executing module 151 is further configured to perform the effectiveness management process of the first AI model based on indication information provided by the network device.

In some embodiments, the executing module 151 is further configured to update the first AI model based on the indication information provided by the network device, or switch the first AI model to a second AI model based on the indication information provided by the network device, or stop using the first AI model based on the indication information provided by the network device.

In some embodiments, the indication information includes configuration information of the first AI model and/or auxiliary information for model update; and the executing module 151 is further configured to update the first AI model based on the configuration information of the first AI model and/or the auxiliary information for model update provided by the network device.

In some embodiments, the configuration information of the first AI model includes structure information and/or parameter information of the first AI model.

In some embodiments, the indication information includes an identifier of the second AI model; the terminal stores at least two sets of candidate AI models; and the executing module 151 is further configured to determine the second AI model from the at least two sets of candidate AI models based on the identifier of the second AI model provided by the network device, and switch the first AI model to the second AI model.

In some embodiments, the at least two sets of candidate AI models are associated with at least one of the computing power, services, or the channel quality of the terminal.

In some embodiments, the request information includes an identifier of a suggested AI model.

In some embodiments, the request information is transmitted over at least one of an RRC message, a MAC-CE, UCI, or a random access procedure.

In some embodiments, the indication information is transmitted over at least one of an RRC message, a MAC-CE, DCI, or system message broadcast.

In some embodiments, updating the first AI model includes at least one of adjusting the number of layers of the first AI model, updating network parameters and/or a network topology of the first AI model, or pruning or compressing the first AI model.

In some embodiments, the reporting module 153 is configured to report a completion message to the network device, wherein the completion message indicates that the terminal completes the effectiveness management process of the first AI model.

In some embodiments, the first AI model is configured to implement at least one of mobility enhancement, CSI feedback, channel estimation, load balancing, power-saving of the terminal/network, beam management, trajectory prediction of the terminal, service prediction, location enhancement, or radio resource management.

In some embodiments, the first AI model operates and is trained or reasoned in any one of an RRC layer, a SDAP layer, a PDCP layer, an RLC layer, a MAC layer, and a PHY layer.

In some embodiments, the functions optimized by the first AI model are functions corresponding to any one of the RRC layer, the SDAP layer, the PDCP layer, the RLC layer, the MAC layer, or the PHY layer.

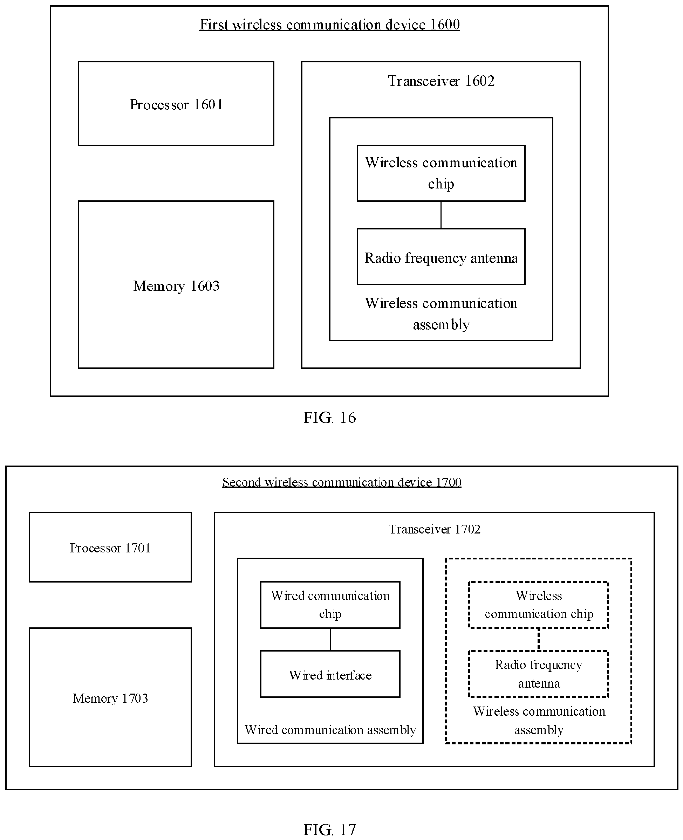

Referring to FIG. 16, a schematic structural diagram of a terminal 1600 according to some exemplary embodiments of the present disclosure is shown. The terminal 1600 includes: a processor 1601, a transceiver 1602, and a memory 1603.

The processor 1601 includes one or more processing cores, and the processor 1601 performs various functional applications and information processing by running software programs and modules.

The transceiver 1602 may include a receiver and a transmitter, which may be implemented, for example, as the same wireless communication assembly that may include a wireless communication chip and a radio frequency antenna.

The memory 1603 may be connected to the processor 1601 and the transceiver 1602.

The memory 1603 may be configured to store computer programs executed by the processor, and the processor 1601 is configured to execute the computer programs to perform the processes performed by the terminal of the wireless communication system in the above method embodiments.

In addition, the memory 1603 may be implemented by any type or combination of volatile or non-volatile storage devices including, but not limited to: a magnetic or optical disk, an electrically erasable programmable read-only memory, an erasable programmable read-only memory, a static random access memory, a read-only memory, a magnetic memory, a flash memory, and a programmable read-only memory.

For details about the processes performed by the transceiver 1602 and the processor 1601 in the terminal 1600, reference may be made to the processes performed by a service management function (SMF) unit in the terminal in the methods shown in FIG. 2, FIG. 3, FIG. 5, FIG. 8, FIG. 9, FIG. 11, and FIG. 13.

Referring to FIG. 17, a schematic structural diagram of a network device 1700 according to some exemplary embodiments of the present disclosure is shown. The network device 1700 includes: a processor 1701, a transceiver 1702, and a memory 1703.

The processor 1701 includes one or more processing cores, and the processor 1701 performs various functional applications and information processing by running software programs and modules.

The transceiver 1702 may include a receiver and a transmitter. For example, the transceiver 1702 may include a wired communication assembly that may include a wired communication chip and a wired interface (e.g., a fiber optic interface). In some embodiments, the transceiver 1702 further includes a wireless communication assembly that includes a wireless communication chip and a radio frequency antenna.

The memory 1703 is connected to the processor 1701 and the transceiver 1702.

The memory 1703 may be configured to store one or more computer program runnable by the processor, and the processor 1701 is configured to run the one or more computer programs to perform the processes performed by the network device of the wireless communication system in the above method embodiments.

In addition, the memory 1703 may be implemented by any type or combination of volatile or non-volatile storage devices including, but not limited to: a magnetic or optical disk, an electrically erasable programmable read-only memory, an erasable programmable read-only memory, a static random access memory, a read-only memory, a magnetic memory, a flash memory, and a programmable read-only memory.

In some embodiments, the transceiver 1702 is configured to receive a second service access request sent by a non-relay terminal in a relay sidelink scenario, the second service access request being configured to request the non-relay terminal to access the first broadcast/multicast service.

For details of the processes performed by the transceiver 1702 and the processor 1701 in the network device 1700, reference may be made to the processes performed by a user plane function (UPF) unit in the network device in the methods shown in FIG. 2, FIG. 3, FIG. 5, FIG. 8, FIG. 9, FIG. 11, and FIG. 13.

For details about the processes performed by the transceiver 1702 and the processor 1701 in the network device 1700, reference may be made to the processes performed by an SMF unit in the network device in the methods shown in FIG. 2, FIG. 3, FIG. 5, FIG. 8, FIG. 9, FIG. 11, and FIG. 13.

Some embodiments of the present disclosure further provide a computer-readable storage medium having one or more computer programs stored therein. The one or more computer programs, when loaded and run by a processor of a terminal or a network device, cause the terminal or the network device to perform the processes performed by the terminal or the network device in the methods shown in FIG. 2, FIG. 3, FIG. 5, FIG. 8, FIG. 9, FIG. 11, and FIG. 13.

Some embodiments of the present disclosure further provide a computer program product including computer instructions. The computer instructions are stored in a computer-readable storage medium. The one or more computer instructions, when read and executed by a processor of a computer device, cause the computer device to perform the processes performed by the terminal or the network device in the methods shown in FIG. 2, FIG. 3, FIG. 5, FIG. 8, FIG. 9, FIG. 11, and FIG. 13.

Some embodiments of the present disclosure further provide a chip. The chip, when running in a computer device, causes the computer device to perform the processes performed by the terminal or the network device in the methods shown in FIG. 2, FIG. 3, FIG. 5, FIG. 8, FIG. 9, FIG. 11, and FIG. 13.

Some embodiments of the present disclosure further provide one or more computer programs. The one or more computer programs, when loaded and run by a processor of a computer device, causes the computer device to perform the processes performed by the terminal or the network device in the methods shown in FIG. 2, FIG. 3, FIG. 5, FIG. 8, FIG. 9, FIG. 11, and FIG. 13.

Those skilled in the art should be appreciated that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, wherein the communication medium includes any medium that facilitates transfer of a computer program from one place to another. The storage medium may be any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for ensuring effectiveness of an artificial intelligence (AI) model in wireless communications, wherein the method is applicable to a terminal, and the method comprises:
performing an effectiveness management process of a first AI model in response to a model failure condition being met.

2. The method according to claim 1, wherein performing the effectiveness management process of the first AI model in response to the model failure condition being met comprises:
performing the effectiveness management process of the first AI model in response to the terminal leaving an effective region of the first AI model; or
performing the effectiveness management process of the first AI model in response to expiration of an effective period of the first AI model; or
performing the effectiveness management process of the first AI model based on a periodic update of the first AI model; or
performing the effectiveness management process of the first AI model in response to a channel quality of the terminal meeting a first threshold condition; or
performing the effectiveness management process of the first AI model in response to an available computing power of the terminal meeting a second threshold condition; or
performing the effectiveness management process of the first AI model in response to a storage capacity of the terminal meeting a third threshold condition; or
performing the effectiveness management process of the first AI model in response to a change of a service type of the terminal or a change of quality of service (QoS); or
performing the effectiveness management process of the first AI model in response to an accuracy of the first AI model failing to meet a model accuracy requirement; or
performing the effectiveness management process of the first AI model in response to a change of a wireless environment; or
performing the effectiveness management process of the first AI model in response to receiving a model switching indication message indicated by a network device.

3. The method according to claim 2, wherein performing the effectiveness management process of the first AI model in response to the terminal leaving the effective region of the first AI model comprises:
receiving a system message broadcast by the network device; and
performing the effectiveness management process of the first AI model in response to a region identifier in the system message being different from a model effective region identifier of the first AI model.

4. The method according to claim 2, wherein the effective region is at least one of a tracking area, a radio access network (RAN) region, or a custom region, and the effective region comprises at least one cell.

5. The method according to claim 2, wherein performing the effectiveness management process of the first AI model in response to expiration of the effective period of the first AI model comprises:
performing the effectiveness management process of the first AI model in response to timeout of a first timer of the first AI model, the first timer being configured to ensure effectiveness of the first AI model.

6. The method according to claim 5, further comprising:
starting the first timer in response to the terminal receiving configuration information of the first timer, or starting the first timer in response to the terminal starting to use the first AI model, or starting the first timer in response to the terminal receiving the first AI model.

7. The method according to claim 6, wherein the first timer is determined based on at least one of an effective duration of the first AI model, the service type, a travel trajectory/region of the terminal, or network load/energy consumption.

8. The method according to claim 2, wherein performing the effectiveness management process of the first AI model in response to the channel quality of the terminal meeting the first threshold condition comprises:
performing the effectiveness management process of the first AI model in response to the channel quality of the terminal being higher than a first threshold, or performing the effectiveness management process of the first AI model in response to the channel quality of the terminal being lower than a second threshold.

9. The method according to claim 2, wherein performing the effectiveness management process of the first AI model in response to the available computing power of the terminal meeting the second threshold condition comprises:
performing the effectiveness management process of the first AI model in response to the available computing power of the terminal being higher than a third threshold, or performing the effectiveness management process of the first AI model in response to the available computing power of the terminal being lower than a fourth threshold.

10. The method according to claim 2, wherein performing the effectiveness management process of the first AI model in response to the storage capacity of the terminal meeting the third threshold condition comprises:
performing the effectiveness management process of the first AI model in response to the storage capacity of the terminal being higher than a fifth threshold, or performing the effectiveness management process of the first AI model in response to the storage capacity of the terminal being lower than a sixth threshold.

11. The method according to claim 2, wherein performing the effectiveness management process of the first AI model in response to a change of the wireless environment comprises:
performing the effectiveness management process of the first AI model in response to a change of a classification of the wireless environment, or performing the effectiveness management process of the first AI model in response to a change of a scenario characteristic of the wireless environment, or performing the effectiveness management process of the first AI model in response to a change of a channel environment indicator characteristic of the wireless environment, or performing the effectiveness management process of the first AI model in response to a change of time domain characteristic information of the wireless environment, or performing the effectiveness management process of the first AI model in response to a change of frequency domain characteristic information of the wireless environment of the terminal, or performing the effectiveness management process of the first AI model in response to a change of spatial characteristic information of the wireless environment.

12. The method according to any one of claims 1 to 11, wherein performing the effectiveness management process of the first AI model in response to the model failure condition being met comprises:
autonomously performing the effectiveness management process of the first AI model in response to the model failure condition being met.

13. The method according to claim 12, wherein autonomously performing the effectiveness management process of the first AI model in response to the model failure condition being met comprises:
autonomously updating the first AI model in response to the model failure condition being met, or autonomously switching the first AI model to a second AI model in response to the model failure condition being met, or autonomously stopping using the first AI model in response to the model failure condition being met.

14. The method according to claim 13, wherein autonomously updating the first AI model in response to the model failure condition being met comprises:
autonomously updating the first AI model based on model input information during use of the first AI model in response to the model failure condition being met.

15. The method according to claim 13, wherein
the terminal stores at least two sets of candidate AI models; and
autonomously switching the first AI model to the second AI model in response to the model failure condition being met comprises:
determining the second AI model from the at least two sets of candidate AI models in response to the model failure condition being met; and
autonomously switching the first AI model to the second AI model.

16. The method according to claim 15, wherein the at least two sets of candidate AI models are associated with at least one of the computing power, services, or the channel quality of the terminal.

17. The method according to any one of claims 1 to 11, wherein performing the effectiveness management process of the first AI model in response to the model failure condition being met comprises:
reporting request information to the network device in response to the model failure condition being met, the request information being configured to request the network device to perform the effectiveness management process of the first AI model; and
performing the effectiveness management process of the first AI model based on indication information provided by the network device.

18. The method according to claim 17, wherein performing the effectiveness management process of the first AI model based on the indication information provided by the network device comprises:
updating the first AI model based on the indication information provided by the network device; or
switching the first AI model to a second AI model based on the indication information provided by the network device; or
stopping using the first AI model based on the indication information provided by the network device.

19. The method according to claim 18, wherein
the indication information comprises configuration information of the first AI model and/or auxiliary information for model update; and
updating the first AI model based on the indication information provided by the network device comprises:
updating the first AI model based on the configuration information of the first AI model and/or the auxiliary information for model update provided by the network device.

20. The method according to claim 19, wherein the configuration information of the first AI model comprises structure information and/or parameter information of the first AI model.

21. The method according to claim 18, wherein
the indication information comprises an identifier of the second AI model, and the terminal stores at least two sets of candidate AI models; and
switching the first AI model to the second AI model based on the indication information provided by the network device comprises:
determining the second AI model from the at least two sets of candidate AI models based on the identifier of the second AI model provided by the network device; and
switching the first AI model to the second AI model.

22. The method according to claim 21, wherein the at least two sets of candidate AI models are associated with at least one of the computing power, services, or the channel quality of the terminal.

23. The method according to claim 21, wherein the request information comprises an identifier of a suggested AI model.

24. The method according to claim 17, wherein the request information is transmitted over at least one of a radio resource control (RRC) message, a medium access control-control element (MAC-CE), uplink control information (UCI), or a random access procedure.

25. The method according to claim 17, wherein the indication information is transmitted over at least one of an RRC message, a MAC-CE, downlink control information (DCI), or system message broadcast.

26. The method according to claim 13 or 18, wherein updating the first AI model comprises at least one of adjusting the number of layers of the first AI model, updating network parameters and/or a network topology of the first AI model, or pruning or compressing the first AI model.

27. The method according to any one of claims 1 to 11, further comprising:
reporting a completion message to a network device, wherein the completion message indicates that the terminal completes the effectiveness management process of the first AI model.

28. The method according to any one of claims 1 to 11, wherein the first AI model is configured to implement at least one of mobility enhancement, channel state information (CSI) feedback, channel estimation, load balancing, power-saving of the terminal/network, beam management, trajectory prediction of the terminal, service prediction, location enhancement, or radio resource management.

29. The method according to any one of claims 1 to 11, wherein the first AI model operates and is trained or reasoned in any one of an RRC layer, a service data adaptation protocol (SDAP) layer, a packet data convergence protocol (PDCP) layer, a radio link control (RLC) layer, a medium access control (MAC) layer, or a physical (PHY) layer.

30. The method according to any one of claims 1 to 11, wherein functions optimized by the first AI model are functions corresponding to any one of an RRC layer, a service data adaptation protocol (SDAP) layer, a packet data convergence protocol (PDCP) layer, a radio link control (RLC) layer, a medium access control (MAC) layer, or a physical (PHY) layer.

31. An apparatus for ensuring effectiveness of an artificial intelligence (AI) model in wireless communications, comprising:
an executing module, configured to perform an effectiveness management process of a first AI model in response to a model failure condition being met.

32. The apparatus according to claim 31, wherein
the executing module is further configured to perform the effectiveness management process of the first AI model in response to a terminal leaving an effective region of the first AI model, or perform the effectiveness management process of the first AI model in response to expiration of an effective period of the first AI model, or perform the effectiveness management process of the first AI model based on a periodic update of the first AI model, or perform the effectiveness management process of the first AI model in response to a channel quality of the terminal meeting a first threshold condition, or perform the effectiveness management process of the first AI model in response to an available computing power of the terminal meeting a second threshold condition, or perform the effectiveness management process of the first AI model in response to a storage capacity of the terminal meeting a third threshold condition, or perform the effectiveness management process of the first AI model in response to a change of a service type of the terminal or a change of quality of service (QoS), or perform the effectiveness management process of the first AI model in response to an accuracy of the first AI model failing to meet a model accuracy requirement, or perform the effectiveness management process of the first AI model in response to a change of a wireless environment, or perform the effectiveness management process of the first AI model in response to receiving a model switching indication message indicated by a network device.

33. The apparatus according to claim 32, further comprising: a receiving module, configured to receive a system message broadcast by the network device;
wherein the executing module is further configured to perform the effectiveness management process of the first AI model in response to a region identifier in the system message being different from a model effective region identifier of the first AI model.

34. The apparatus according to claim 32, wherein the effective region is at least one of a tracking area, a radio access network (RAN) region, or a custom region, and the effective region comprises at least one cell.

35. The apparatus according to claim 32, wherein
the executing module is further configured to perform the effectiveness management process of the first AI model in response to expiration of an effective period of a first timer of the first AI model, wherein the first timer is configured to ensure effectiveness of the first AI model.

36. The apparatus according to claim 35, wherein
the executing module is further configured to start the first timer in response to the terminal receiving configuration information of the first timer, or start the first timer in response to the terminal starting to use the first AI model.

37. The apparatus according to claim 36, wherein the first timer is determined based on at least one of an effective duration of the first AI model, the service type, a travel trajectory/region of the terminal, or network load/energy consumption.

38. The apparatus according to claim 32, wherein
the executing module is further configured to perform the effectiveness management process of the first AI model in response to the channel quality of the terminal being higher than a first threshold, or perform the effectiveness management process of the first AI model in response to the channel quality of the terminal being lower than a second threshold.

39. The apparatus according to claim 32, wherein
the executing module is further configured to perform the effectiveness management process of the first AI model in response to the available computing power of the terminal being higher than a third threshold, or perform the effectiveness management process of the first AI model in response to the available computing power of the terminal being lower than a fourth threshold.

40. The apparatus according to claim 32, wherein
the executing module is further configured to perform the effectiveness management process of the first AI model in response to the storage capacity of the terminal being higher than a fifth threshold, or perform the effectiveness management process of the first AI model in response to the storage capacity of the terminal being lower than a sixth threshold.

41. The apparatus according to claim 32, wherein
the executing module is further configured to perform the effectiveness management process of the first AI model in response to a change of a classification of the wireless environment, or perform the effectiveness management process of the first AI model in response to a change of a scenario characteristic of the wireless environment, or perform the effectiveness management process of the first AI model in response to a change of a channel environment indicator characteristic of the wireless environment, or perform the effectiveness management process of the first AI model in response to a change of time domain characteristic information of the wireless environment, or perform the effectiveness management process of the first AI model in response to a change of frequency domain characteristic information of the wireless environment of the terminal, or perform the effectiveness management process of the first AI model in response to a change of spatial characteristic information of the wireless environment.

42. The apparatus according to any one of claims 31 to 41, wherein the executing module is further configured to autonomously perform the effectiveness management process of the first AI model in response to the model failure condition being met.

43. The apparatus according to claim 32, wherein
the executing module is further configured to autonomously update the first AI model in response to the model failure condition being met, or autonomously switch the first AI model to a second AI model in response to the model failure condition being met, or autonomously stop using the first AI model in response to the model failure condition being met.

44. The apparatus according to claim 43, wherein
the executing module is further configured to autonomously update the first AI model based on model input information during use of the first AI model in response to the model failure condition being met.

45. The apparatus according to claim 44, wherein
the terminal stores at least two sets of candidate AI models; and
the executing module is further configured to determine the second AI model from the at least two sets of candidate AI models in response to the model failure condition being met, and autonomously switch the first AI model to the second AI model.

46. The apparatus according to claim 45, wherein the at least two sets of candidate AI models are associated with at least one of the computing power, services, or the channel quality of the terminal.

47. The apparatus according to any one of claims 31 to 41, further comprising: a reporting module, configured to report request information to the network device in response to the model failure condition being met, wherein the request information is to request the network device to perform the effectiveness management process of the first AI model;
wherein the executing module is further configured to perform the effectiveness management process of the first AI model based on indication information provided by the network device.

48. The apparatus according to claim 47, wherein
the executing module is further configured to update the first AI model based on the indication information provided by the network device, or switch the first AI model to a second AI model based on the indication information provided by the network device, or stop using the first AI model based on the indication information provided by the network device.

49. The apparatus according to claim 48, wherein
the indication information comprises configuration information of the first AI model and/or auxiliary information for model update; and
the executing module is further configured to update the first AI model based on the configuration information of the first AI model and/or the auxiliary information for model update provided by the network device.

50. The apparatus according to claim 49, wherein the configuration information of the first AI model comprises structure information and/or parameter information of the first AI model.

51. The apparatus according to claim 48, wherein
the indication information comprises an identifier of the second AI model, and the terminal stores at least two sets of candidate AI models; and
the executing module is further configured to determine the second AI model from the at least two sets of candidate AI models based on the identifier of the second AI model provided by the network device, and switch the first AI model to the second AI model.

52. The apparatus according to claim 51, wherein the at least two sets of candidate AI models are associated with at least one of the computing power, services, or the channel quality of the terminal.

53. The apparatus according to claim 51, wherein the request information comprises an identifier of a suggested AI model.

54. The apparatus according to claim 47, wherein the request information is transmitted over at least one of a radio resource control (RRC) message, a medium access control-control element (MAC-CE), uplink control information (UCI), or a random access procedure.

55. The apparatus according to claim 47, wherein the indication information is transmitted over at least one of an RRC message, a MAC-CE, downlink control information (DCI), or system message broadcast.

56. The apparatus according to claim 43 or 48, wherein updating the first AI model comprises at least one of adjusting the number of layers of the first AI model, updating network parameters and/or a network topology of the first AI model, or pruning or compressing the first AI model.

57. The apparatus according to any one of claims 31 to 41, further comprising:
a reporting module, configured to report a completion message to a network device, wherein the completion message indicates that the terminal completes the effectiveness management process of the first AI model.

58. The apparatus according to any one of claims 31 to 41, wherein the first AI model is configured to implement at least one of mobility enhancement, channel state information (CSI) feedback, channel estimation, load balancing, power-saving of the terminal/network, beam management, trajectory prediction of the terminal, service prediction, location enhancement, or radio resource management.

59. The apparatus according to any one of claims 31 to 41, wherein the first AI model operates and is trained or reasoned in any one of an RRC layer, a service data adaptation protocol (SDAP) layer, a packet data convergence protocol (PDCP) layer, a radio link control (RLC) layer, a medium access control (MAC) layer, or a physical (PHY) layer.

60. The apparatus according to any one of claims 31 to 41, wherein functions optimized by the first AI model are functions corresponding to any one of an RRC layer, a service data adaptation protocol (SDAP) layer, a packet data convergence protocol (PDCP) layer, a radio link control (RLC) layer, a medium access control (MAC) layer, or a physical (PHY) layer.

61. A terminal, comprising:
a processor;
a transceiver connected to the processor; and
a memory configured to store instructions executable by the processor;
wherein the processor is configured to load and execute the instructions to perform the method for ensuring effectiveness of an artificial intelligence (AI) model in wireless communications as defined in any one of claims 1 to 30.

62. A computer-readable storage medium storing at least one instruction, at least one program, a code set, or an instruction set therein, wherein the at least one instruction, the at least one program, the code set, or the instruction set, when loaded and executed by a processor, causes the processor to perform the method for ensuring effectiveness of an artificial intelligence (AI) model in wireless communications as defined in any one of claims 1 to 30.
